# FASCICULE DE BREVET EUROPEEN

(11) **EP 4 105 595 B1**
(45) Date de publication et mention de la délivrance du brevet: **23.08.2023**
(21) Numéro de dépôt: 22176748.6
(22) Date de dépôt: 01.06.2022
(51) Int. Cl.: G01B 11/00, G01N 21/95, G06F 3/01, G06T 7/33, G06T 7/73, B64F 5/60, G01N 21/88

(54) **PROCÉDÉ DE LOCALISATION D'AU MOINS UN POINT D'UNE PIÈCE RÉELLE SUR UNE MAQUETTE NUMÉRIQUE**
VERFAHREN ZUR LOKALISIERUNG MINDESTENS EINES PUNKTES EINES REALEN TEILS AUF EINEM DIGITALEN MODELL
METHOD FOR LOCATING AT LEAST ONE POINT OF A REAL PART ON A DIGITAL MODEL

(30) Priorité: 14.06.2021 FR 2106219
(43) Date de publication de la demande: 21.12.2022
(73) Titulaire: AIRBUS OPERATIONS (S.A.S.), 31060 Toulouse (FR)
(72) Inventeur: CHEREAU, Franck, 31060 TOULOUSE (FR); ROGER, Dominique, 31700 BLAGNAC (FR)
(74) Mandataire: Jardel, Marc Henry Philippe

(56) Documents cités:
- EP-B1- 2 641 661
- US-B2- 9 448 758
- US-B2- 10 573 089

## Description

La présente demande se rapporte à un procédé de localisation d'au moins un point d'une pièce réelle sur une maquette numérique.

Lors d'une opération d'inspection qualité d'une pièce réelle, un opérateur doit localiser le plus précisément possible chaque défaut. En suivant, pour chaque défaut, un point virtuel correspondant au défaut localisé est positionné sur une maquette numérique afin de déterminer comment ce défaut peut être traité.

Selon un mode opératoire, le défaut est localisé sur la pièce réelle en utilisant des moyens de mesure manuels comme un réglet par exemple. Une fois que les coordonnées du point localisé sur la pièce réelle sont déterminées dans le repère de la pièce, ces coordonnées doivent être converties dans le repère de la maquette numérique afin que le point localisé sur la pièce réelle soit correctement positionné sur la maquette numérique.

Ce mode opératoire n'est pas satisfaisant car il peut s'avérer complexe de réaliser une mesure précise dans le cas d'une pièce de grandes dimensions, complexe et/ou sans référentiel visuel.

US 10 573 089 B2 décrit un procédé concernant une pièce virtuelle dans un premier repère et une pièce réelle dans un deuxième repère. US 9 448 758 B2 décrit une utilisation d'un modèle virtuel type CAD d'une pièce pour y enregistrer les coordonnées de différents points mesurés associés à des opérations de maintenance sur un avion. EP 2 641 661 B1 décrit un système stéréographique qui permet entre autres de mesurer les coordonnées des points d'une surface et de transposer ces points dans un modèle CAD.

La présente invention vise à remédier à tout ou partie des inconvénients de l'art antérieur. A cet effet, l'invention a pour objet un procédé de localisation d'au moins un point d'une pièce réelle sur une pièce virtuelle définie dans un premier repère, caractérisé en ce que le procédé comprend :
- une étape de visualisation de la pièce réelle avec un dispositif de réalité augmentée configuré pour afficher un pointeur en superposition de la pièce réelle et déterminer des coordonnées du pointeur dans un deuxième repère,
- une étape de détermination d'une matrice de passage pour convertir des coordonnées d'un point réel situé dans le deuxième repère en coordonnées d'un point virtuel situé dans le premier repère et correspondant au point réel,
- une étape de positionnement du pointeur de manière à ce qu'il pointe sur le point à localiser, et
- une étape de détermination des coordonnées dans le premier repère du point à localiser en convertissant grâce à la matrice de passage les coordonnées dans le deuxième repère du pointeur pointé sur le point à localiser.

Le procédé de l'invention permet de supprimer la prise de mesure manuelle et d'automatiser la détermination des coordonnées d'un point d'une pièce réelle, comme un défaut par exemple, dans le repère d'une maquette virtuelle d'un aéronef.

Selon une autre caractéristique, l'étape de détermination de la matrice de passage consiste à déterminer des coordonnées d'au moins trois points virtuels de calibration dans le premier repère, pour chaque point virtuel de calibration dans le premier repère correspondant à un point réel de calibration dans le deuxième repère, à déterminer des coordonnées dans le deuxième repère pour chaque point réel de calibration puis à déterminer la matrice de passage à partir des coordonnées de chaque point virtuel de calibration dans le premier repère et celles de chaque point réel de calibration dans le deuxième repère.

Selon une autre caractéristique, les coordonnées dans le deuxième repère de chaque point réel de calibration sont déterminées en ciblant, tour à tour, avec le pointeur chacun des points réels de calibration.

Selon une autre caractéristique, le procédé comprend une étape d'affichage de la pièce virtuelle superposée à la pièce réelle.

Selon une autre caractéristique, les coordonnées du point à localiser sont déterminées en fonction d'une position statique du pointeur ciblant le point à localiser.

Selon une autre caractéristique, les coordonnées du point à localiser évoluent en fonction de la position en temps réel du pointeur mobile dans le deuxième repère.

Selon une autre caractéristique, le point à localier est un défaut de la pièce réelle.

Selon une autre caractéristique, au moins une image de la pièce réelle, sur laquelle sont visibles le pointeur pointant le défaut ainsi que les coordonnées du point ciblé par le pointeur dans le premier repère, est prise.

D'autres caractéristiques et avantages ressortiront de la description de l'invention qui va suivre, description donnée à titre d'exemple uniquement, en regard des dessins annexés parmi lesquels :
- La figure 1 est une vue en perspective d'une maquette virtuelle d'un aéronef,
- La figure 2 est une représentation schématique d'une pièce virtuelle comportant trois points virtuels de calibration illustrant un mode de réalisation de l'invention,
- La figure 3 est une vue en perspective d'un opérateur équipé d'un équipement de réalité augmentée visualisant une pièce réelle comportant trois points réels de calibration illustrant un mode de réalisation de l'invention, et
- La figure 4 est une représentation du champ de vision d'un opérateur vu à travers un équipement de réalité augmentée lors d'une étape de prise de mesure illustrant un mode de réalisation de l'invention.

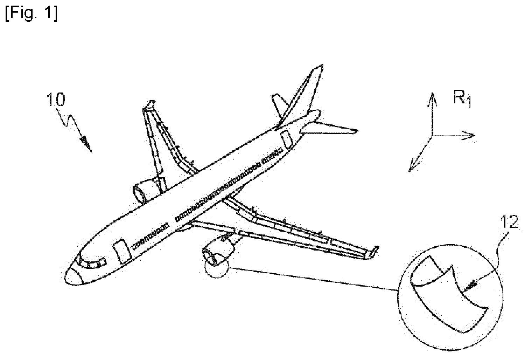

Sur la figure 1, on a représenté en 10 une maquette virtuelle d'un aéronef dans un premier repère R1. Cette maquette virtuelle 10 comprend une multitude de pièces virtuelles 12 ou d'assemblages de pièces.

Pour la présente demande, on entend par une pièce une seule pièce ou plusieurs pièces comme un assemblage de pièces par exemple.

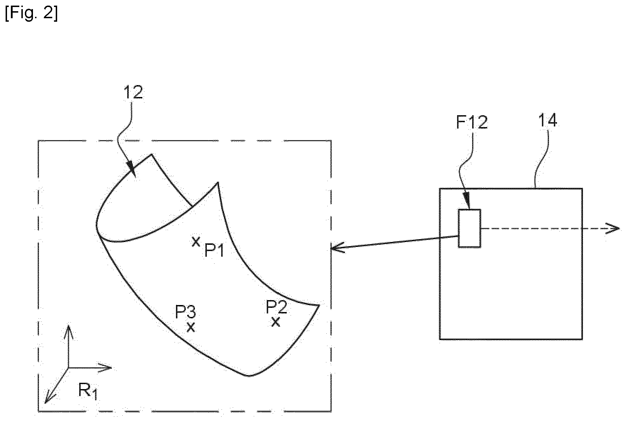

Comme illustré sur la figure 2, au moins une pièce virtuelle 12 est définie dans au moins un fichier numérique de pièce F12. La maquette virtuelle 10 de l'aéronef comprend une multitude de fichiers numériques de pièce F12. Les différents fichiers numériques de pièce F12 peuvent être stockés dans un dispositif de stockage 14. Ces différents fichiers numériques de pièce F12 peuvent être exportés et/ou convertis en tout fichier compatible avec un équipement de réalité augmentée.

A partir du fichier numérique de pièce F12, il est possible de visualiser, à l'aide d'un logiciel de visualisation adapté au fichier, une représentation de la pièce virtuelle12 dans le premier repère R1. Chaque point virtuel de la pièce virtuelle 12 présente des coordonnées exprimées dans le premier repère R1.

A titre d'exemple, la pièce virtuelle 12 correspond à une partie d'une entrée d'air d'une nacelle d'un aéronef. Bien entendu, l'invention n'est pas limitée à cette pièce.

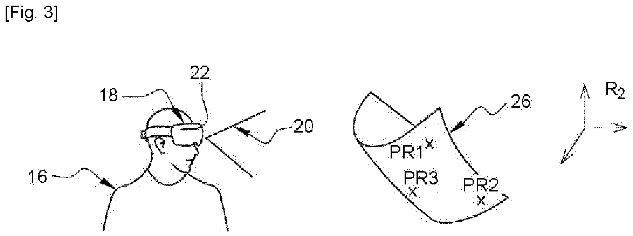

Pour la mise en oeuvre d'un procédé de localisation d'au moins un point d'une pièce réelle, comme illustré sur la figure 3, un opérateur 16 est équipé d'un équipement de réalité augmentée 18, comme des lunettes par exemple, configuré pour afficher dans le champ de vision 20 de l'opérateur 16 au moins une information.

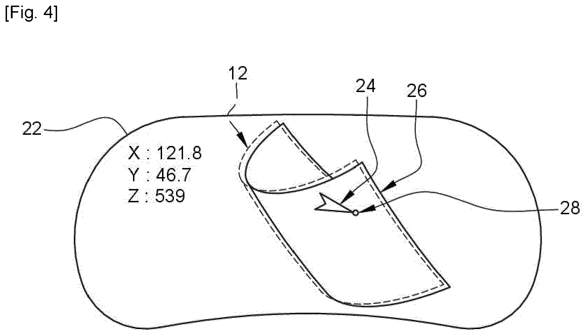

Cet équipement de réalité augmentée 18 comprend un écran 22 et il est configuré pour afficher sur l'écran 22, dans le champ de vision 20 de l'opérateur 16, au moins un pointeur 24 (visible sur la figure 4).

L'équipement de réalité augmentée 18 comprend au moins un logiciel configuré pour afficher le pointeur 24 et déterminer les coordonnées du pointeur 24 dans un deuxième repère R2 associé à un environnement réel.

Comme illustré sur la figure 4, une pièce réelle 26 correspondant à la pièce virtuelle 12 est visualisée par l'opérateur 16 avec le dispositif de réalité augmentée 18, le pointeur 24 s'affichant sur l'écran 22 en superposition de la pièce réelle 26. Cette pièce réelle 26 peut comprendre au moins un défaut 28 à l'issue de son procédé de fabrication.

La pièce réelle 26 est identique à la pièce virtuelle 12. A chaque point réel de la pièce réelle 26 correspond un point virtuel de la pièce virtuelle 12.

Selon un mode opératoire, un procédé de visualisation d'au moins un critère d'acceptation comprend une étape de calibration consistant à déterminer une matrice de passage pour convertir des coordonnées d'un point réel situé dans le deuxième repère R2 en coordonnées d'un point virtuel situé dans le premier repère R1 et correspondant au point réel. Eventuellement, une matrice de passage inverse peut être déterminée afin de convertir des coordonnés d'un point virtuel situé dans le premier repère R1 en coordonnées d'un point réel situé dans le deuxième repère R2 et correspondant au point virtuel.

Cette étape de calibration consiste à sélectionner au moins trois points virtuels de calibration P1, P2, P3 situés, dans le premier repère R1, sur la maquette virtuelle 10 de l'aéronef et déterminer des coordonnées dans le premier repère R1 pour chaque point virtuel de calibration P1, P2, P3. Comme illustré sur la figure 2, les points virtuels de calibration P1, P2, P3 sont positionnés sur la pièce virtuelle 12.

Pour chaque point virtuel de calibration P1, P2, P2, la pièce réelle 26 présente un point réel de calibration PR1, PR2, PR3 qui correspond au dit point virtuel de calibration P1, P2, P3. Les points virtuels de calibration P1, P2, P2 sont des points remarquables et choisis de manière à ce que les points réels de calibration PR1, PR2, PR3 correspondants soient facilement identifiables sur la pièce réelle 26.

L'étape de calibration consiste également à déterminer des coordonnées dans le deuxième repère R2 pour chaque point réel de calibration PR1, PR2, PR3 de la pièce réelle 26. Selon un mode opératoire, l'équipement de réalité augmentée 18 est utilisé pour réaliser cette étape, le pointeur 24 ciblant, tour à tour, chacun des points réels de calibration PR1, PR2, PR3.

Connaissant les coordonnées de chaque point virtuel de calibration P1, P2, P3 dans le premier repère R1 et celles de chaque point réel de calibration PR1, PR2, PR3 dans le deuxième repère R2, la matrice de passage peut être déterminée.

Cette étape de calibration peut être réalisée une seule fois pour chaque pièce réelle 26. Elle n'a pas besoin d'être répétée entre la localisation de deux points sur la même pièce réelle 26. Le procédé de localisation d'au moins un point, comme un défaut 28 par exemple, comprend les étapes suivantes :
- d'affichage sur l'écran 22 de l'équipement de réalité augmentée 20 de la pièce virtuelle 12 en superposition de la pièce réelle 26,
- de positionnement du pointeur 24 de l'équipement de réalité augmentée 18 de manière à ce qu'il cible le point réel à localiser,
- de détermination des coordonnées dans le deuxième repère R2 du pointeur 24 pointé sur le point à localiser,
- de détermination des coordonnées dans le premier repère R1 du point à localiser en convertissant grâce à la matrice de passage les coordonnées dans le deuxième repère R2 du pointeur 24 pointé sur le point à localiser.

Selon un mode de réalisation, les coordonnées du point dans le premier repère R1, correspondant à celui de la maquette virtuelle 10 de l'aéronef, sont affichées sur l'écran 22 de l'équipement de réalité augmentée 18.

Les premier et deuxième repères R1 et R2 sont des repères orthonormés et les coordonnées d'un point virtuel ou réel comprennent trois coordonnées référencées X, Y, Z.

Selon un premier mode opératoire, les différentes étapes du procédé de localisation sont réalisées en statique, les coordonnées du point à localiser étant déterminées en fonction d'une position statique du pointeur 24 ciblant le point à localiser.

Selon un deuxième mode opératoire, les différentes étapes du procédé de localisation sont réalisées en dynamique, les coordonnées du point à localiser étant déterminées en temps réel et évoluant en fonction de la position en temps réel du pointeur 24 mobile dans le deuxième repère R2.

Les coordonnées du point à localiser peuvent être déterminées et affichées en fonction de la position du pointeur 24, sans que nécessairement ce dernier ne cible de défaut 28. Ainsi, le point à localiser peut être tout élément d'une pièce ou d'un assemblage comme une fixation, un orifice ou une géométrie particulière.

Ainsi, les coordonnées dans le premier repère R1 du point à localiser pointé par le pointeur 24 sont déterminées, en temps réel, à partir de la matrice de passage et des coordonnées dans le deuxième repère R2 du pointeur 24.

Pour afficher la pièce virtuelle 12 correspondant à la pièce réelle 26, le fichier numérique de pièce F12 de la pièce virtuelle 12 est converti ou exporté en un fichier exploitable par le logiciel implémenté dans l'équipement de réalité augmentée 18.

Selon un mode opératoire, l'étape d'affichage de la pièce virtuelle 12 superposée sur la pièce réelle 26 est réalisée en faisant coïncider les points réels de calibration PR1, PR2, PR3 de la pièce réelle 26 et les points virtuels de calibration P1, P2, P3 de la pièce virtuelle 12 et/ou en utilisant la matrice de passage ou la matrice de passage inverse.

Selon un mode de réalisation, la représentation de la pièce virtuelle 12 superposée sur la pièce réelle 26 n'est pas nécessaire.

Pour faciliter le traitement du défaut, au moins une image de la pièce réelle 26, sur laquelle sont visibles le pointeur 24 pointant le défaut 28 détecté ainsi que les coordonnées du point ciblé par le pointeur 24 dans le premier repère R1 correspondant à celui de la maquette virtuelle 10, est prise.

L'équipement de réalité augmentée 18 peut être configuré pour saisir une telle image.

Le fait de pointer un point réel d'une pièce réelle 26 avec un pointeur 24 d'un équipement de réalité augmentée 18 simplifie la prise de mesure et permet d'obtenir une meilleure précision. Le procédé de l'invention permet de supprimer la prise de mesure manuelle et d'automatiser la détermination des coordonnées d'un défaut dans le repère d'une maquette virtuelle d'un aéronef.

## Revendications

1. Procédé de localisation d'au moins un point d'une pièce réelle (26) sur une pièce virtuelle (12) définie dans un premier repère (R1), **caractérisé en ce que** le procédé comprend :
- une étape de visualisation de la pièce réelle (26) avec un dispositif de réalité augmentée (18) configuré pour afficher un pointeur (24) en superposition de la pièce réelle (26) et déterminer des coordonnées du pointeur (24) dans un deuxième repère (R2),
- une étape de détermination d'une matrice de passage pour convertir des coordonnées d'un point réel situé dans le deuxième repère (R2) en coordonnées d'un point virtuel situé dans le premier repère (R1) et correspondant au point réel,
- une étape de positionnement du pointeur (24) de manière à ce qu'il pointe sur le point à localiser, et
- une étape de détermination des coordonnées dans le premier repère (R1) du point à localiser en convertissant grâce à la matrice de passage les coordonnées dans le deuxième repère (R2) du pointeur (24) pointé sur le point à localiser.

2. Procédé de localisation d'au moins un point d'une pièce réelle (26) sur une pièce virtuelle (12) selon la revendication 1, **caractérisé en ce que** l'étape de détermination de la matrice de passage consiste à déterminer des coordonnées d'au moins trois points virtuels de calibration (P1, P2, P3) dans le premier repère (R1), pour chaque point virtuel de calibration (P1, P2, P3) dans le premier repère (R1) correspondant à un point réel de calibration (PR1, PR2, PR3) dans le deuxième repère (R2), à déterminer des coordonnées dans le deuxième repère (R2) pour chaque point réel de calibration (PR1, PR2, PR3) puis à déterminer la matrice de passage à partir des coordonnées de chaque point virtuel de calibration (P1, P2, P3) dans le premier repère (R1) et celles de chaque point réel de calibration (PR1, PR2, PR3) dans le deuxième repère (R2).

3. Procédé de localisation d'au moins un point d'une pièce réelle (26) sur une pièce virtuelle (12) selon la revendication précédente, **caractérisé en ce que** les coordonnées dans le deuxième repère (R2) de chaque point réel de calibration (PR1, PR2, PR3) sont déterminées en ciblant, tour à tour, avec le pointeur (24) chacun des points réels de calibration (PR1, PR2, PR3).

4. Procédé de localisation d'au moins un point d'une pièce réelle (26) sur une pièce virtuelle (12) selon la revendication précédente, **caractérisé en ce que** le procédé comprend une étape d'affichage de la pièce virtuelle (12) superposée à la pièce réelle (26).

5. Procédé de localisation d'au moins un point d'une pièce réelle (26) sur une pièce virtuelle (12) selon l'une des revendications précédentes, **caractérisé en ce que** les coordonnées du point à localiser sont déterminées en fonction d'une position statique du pointeur (24) ciblant le point à localiser.

6. Procédé de localisation d'au moins un point d'une pièce réelle (26) sur une pièce virtuelle (12) selon l'une des revendications 1 à 4, **caractérisé en ce que** les coordonnées du point à localiser évoluent en fonction de la position en temps réel du pointeur (24) mobile dans le deuxième repère (R2).

7. Procédé de localisation d'au moins un point d'une pièce réelle (26) sur une pièce virtuelle (12) selon l'une des revendications, **caractérisé en ce que** le point à localier est un défaut (28) de la pièce réelle (26).

8. Procédé de localisation d'au moins un point d'une pièce réelle (26) sur une pièce virtuelle (12) selon la revendication précédente, **caractérisé en ce qu'**au moins une image de la pièce réelle (26), sur laquelle sont visibles le pointeur (24) pointant le défaut (28) ainsi que les coordonnées du point pointé par le pointeur (24) dans le premier repère (R1), est prise.

## Patentansprüche

1. Verfahren zur Lokalisierung mindestens eines Punkts eines realen Teils (26) auf einem virtuellen Teil (12), das in einem ersten Koordinatensystem (R1) definiert ist, **dadurch gekennzeichnet, dass** das Verfahren Folgendes umfasst:
- einen Schritt des Visualisierens des realen Teils (26) mit einer Augmented-Reality-Vorrichtung (18), die dazu ausgelegt ist, einen Zeiger (24) in Überlagerung des realen Teils (26) anzuzeigen und Koordinaten des Zeigers (24) in einem zweiten Koordinatensystem (R2) zu bestimmen,
- einen Schritt des Bestimmens einer Übergangsmatrix zum Umwandeln von Koordinaten eines realen Punkts, der sich im zweiten Koordinatensystem (R2) befindet, in Koordinaten eines virtuellen Punkts, der sich im ersten Koordinatensystem (R1) befindet und dem realen Punkt entspricht,
- einen Schritt des Positionierens des Zeigers (24), so dass er auf den zu lokalisierenden Punkt zeigt, und
- einen Schritt des Bestimmens der Koordinaten des zu lokalisierenden Punkts im ersten Koordinatensystem (R1) durch Umwandeln der Koordinaten im zweiten Koordinatensystem (R2) des Zeigers (24), der auf den zu lokalisierenden Punkt gerichtet ist, mittels der Übergangsmatrix.

2. Verfahren zur Lokalisierung mindestens eines Punkts eines realen Teils (26) auf einem virtuellen Teil (12) nach Anspruch 1, **dadurch gekennzeichnet, dass** der Schritt des Bestimmens der Übergangsmatrix darin besteht, Koordinaten von mindestens drei virtuellen Kalibrierungspunkten (P1, P2, P3) im ersten Koordinatensystem (R1) zu bestimmen, wobei jeder virtuelle Kalibrierungspunkt (P1, P2, P3) im ersten Koordinatensystem (R1) einem realen Kalibrierungspunkt (PR1, PR2, PR3) im zweiten Koordinatensystem (R2) entspricht, Koordinaten im zweiten Koordinatensystem (R2) für jeden realen Kalibrierungspunkt (PR1, PR2, PR3) zu bestimmen und anschließend die Übergangsmatrix anhand der Koordinaten jedes virtuellen Kalibrierungspunkts (P1, P2, P3) im ersten Koordinatensystem (R1) und derer jedes realen Kalibrierungspunkts (PR1, PR2, PR3) im zweiten Koordinatensystem (R2) zu bestimmen.

3. Verfahren zur Lokalisierung mindestens eines Punkts eines realen Teils (26) auf einem virtuellen Teil (12) nach dem vorangehenden Anspruch, **dadurch gekennzeichnet, dass** die Koordinaten jedes realen Kalibrierungspunkts (PR1, PR2, PR3) im zweiten Koordinatensystem (R2) bestimmt werden, indem der Zeiger (24) der Reihe nach auf jeden der realen Kalibrierungspunkte (PR1, PR2, PR3) gerichtet wird.

4. Verfahren zur Lokalisierung mindestens eines Punkts eines realen Teils (26) auf einem virtuellen Teil (12) nach dem vorangehenden Anspruch, **dadurch gekennzeichnet, dass** das Verfahren einen Schritt des Anzeigens des virtuellen Teils (12) in Überlagerung des realen Teils (26) umfasst.

5. Verfahren zur Lokalisierung mindestens eines Punkts eines realen Teils (26) auf einem virtuellen Teil (12) nach einem der vorangehenden Ansprüche, **dadurch gekennzeichnet, dass** die Koordinaten des zu lokalisierenden Punkts in Abhängigkeit von einer statischen Position des Zeigers (24), der auf den zu lokalisierenden Punkt gerichtet ist, bestimmt werden.

6. Verfahren zur Lokalisierung mindestens eines Punkts eines realen Teils (26) auf einem virtuellen Teil (12) nach einem der Ansprüche 1 bis 4, **dadurch gekennzeichnet, dass** sich die Koordinaten des zu lokalisierenden Punkts in Abhängigkeit von der Echtzeitposition des beweglichen Zeigers (24) im zweiten Koordinatensystem (R2) entwickeln.

7. Verfahren zur Lokalisierung mindestens eines Punkts eines realen Teils (26) auf einem virtuellen Teil (12) nach einem der Ansprüche, **dadurch gekennzeichnet, dass** der zu lokalisierende Punkt ein Defekt (28) des realen Teils (26) ist.

8. Verfahren zur Lokalisierung mindestens eines Punkts eines realen Teils (26) auf einem virtuellen Teil (12) nach dem vorangehenden Anspruch, **dadurch gekennzeichnet, dass** mindestens ein Bild des realen Teils (26) aufgenommen wird, auf dem der Zeiger (24), der auf den Defekt (28) gerichtet ist, sowie die Koordinaten des vom Zeiger (24) gezeigten Punkts im ersten Koordinatensystem (R1) sichtbar sind.

## Claims

1. Method for locating at least one point of a real part (26) on a virtual part (12) defined in a first coordinate system (R1), **characterized in that** the method comprises:
- a step of viewing the real part (26) with an augmented-reality device (18) configured to display a pointer (24) in superposition on the real part (26) and to determine coordinates of the pointer (24) in a second coordinate system (R2),
- a step of determining a transfer matrix for converting the coordinates of a real point located in the second coordinate system (R2) into coordinates of a virtual point located in the first coordinate system (R1) and corresponding to the real point,
- a step of positioning the pointer (24) so that it points at the point to be located, and
- a step of determining coordinates in the first coordinate system (R1) of the point to be located by converting by virtue of the transfer matrix the coordinates in the second coordinate system (R2) of the pointer (24) pointed at the point to be located.

2. Method for locating at least one point of a real part (26) on a virtual part (12) according to Claim 1, **characterized in that** the step of determining the transfer matrix consists in determining coordinates of at least three virtual calibration points (P1, P2, P3) in the first coordinate system (R1), each virtual calibration point (P1, P2, P3) in the first coordinate system (R1) corresponding to a real calibration point (PR1, PR2, PR3) in the second coordinate system (R2), in determining coordinates in the second coordinate system (R2) for each real calibration point (PR1, PR2, PR3) then in determining the transfer matrix on the basis of the coordinates of each virtual calibration point (P1, P2, P3) in the first coordinate system (R1) and the coordinates of each real calibration point (PR1, PR2, PR3) in the second coordinate system (R2).

3. Method for locating at least one point of a real part (26) on a virtual part (12) according to the preceding claim, **characterized in that** the coordinates in the second coordinate system (R2) of each real calibration point (PR1, PR2, PR3) are determined by targeting, in turn, with the pointer (24), each of the real calibration points (PR1, PR2, PR3).

4. Method for locating at least one point of a real part (26) on a virtual part (12) according to the preceding claim, **characterized in that** the method comprises a step of displaying the virtual part (12) superposed on the real part (26).

5. Method for locating at least one point of a real part (26) on a virtual part (12) according to one of the preceding claims, **characterized in that** the coordinates of the point to be located are determined depending on a static position of the pointer (24) targeting the point to be located.

6. Method for locating at least one point of a real part (26) on a virtual part (12) according to one of Claims 1 to 4, **characterized in that** the coordinates of the point to be located vary as a function of the real-time position of the pointer (24) as it moves in the second coordinate system (R2).

7. Method for locating at least one point of a real part (26) on a virtual part (12) according to one of the claims, **characterized in that** the point to be located is a defect (28) in the real part (26).

8. Method for locating at least one point of a real part (26) on a virtual part (12) according to the preceding claim, **characterized in that** at least one image of the real part (26), in which are visible the pointer (24) pinpointing the defect (28) and the coordinates of the point pinpointed by the pointer (24) in the first coordinate system (R1), is taken.
